# FASCICULE DE BREVET EUROPEEN

(11) **EP 3 300 196 B1**
(45) Date de publication et mention de la délivrance du brevet: **19.08.2020**
(21) Numéro de dépôt: 17192014.3
(22) Date de dépôt: 20.09.2017
(51) Int. Cl.: H02G 3/18, E02D 29/14, H02G 9/10

(54) **TÊTE DE CHAMBRE DE RACCORDEMENT POURVUE D'UN COFFRAGE RÉGLABLE EN HAUTEUR**
ANSCHLUSSKAMMER MIT HÖHENVERSTELLBAREM RAHMEN
CONNECTION CHAMBER WITH ADJUSTABLE HEIGHT FRAME

(30) Priorité: 22.09.2016 FR 1658896
(43) Date de publication de la demande: 28.03.2018
(73) Titulaire: EJ EMEA, 60149 Saint-Crépin-Ibouvillers (FR)
(72) Inventeur: FOUREZ, Alexandre, Michel, Daniel, 60500 Chantilly (FR); DEBUCHY, Sylvain, Jean-Jacques, Daniel, Ghislain, 60110 Lormaison (FR); BORYCKI, Gérald, 60110 Creil (FR)
(74) Mandataire: Santarelli

(56) Documents cités:
- EP-A1- 2 878 734
- EP-A1- 2 924 832
- WO-A1-2013/172720
- FR-A- 819 471
- FR-A1- 2 520 028

## Description

La présente invention concerne une tête de chambre de raccordement destinée à être enterrée dans le sol.

Elle vise également un dispositif de chambre de raccordement équipé d'une tête de chambre.

Un tel dispositif est un ouvrage civil souterrain et dont la chambre enterrée est destinée à recevoir des moyens de raccordement de fils ou câbles électriques d'un réseau souterrain de distribution par exemple d'électricité et/ou de télécommunication.

Le document FR 3 024 924 divulgue un dispositif de chambre de raccordement comprenant un local ou chambre destiné à être enterré dans le sol et présentant une feuillure interne dans laquelle est logé un cadre métallique délimitant lui-même une feuillure interne apte à accueillir au moins un tampon de fermeture de l'ouverture supérieure de la chambre.

Le cadre métallique est configuré pour recouvrir un bord supérieur périphérique de la chambre et comporte une partie plate périphérique qui est munie d'une multiplicité de moyens réglables de modification de la distance séparant le cadre métallique du fond de la feuillure interne de la chambre, chacun de ces moyens réglables comprenant un trou taraudé formé dans la partie plate périphérique du cadre métallique et dans lequel est vissée une vis. Ainsi, en fonction de la profondeur de vissage des vis, la position du cadre métallique par rapport à la chambre peut être réglée, permettant d'ajuster le positionnement du cadre métallique par rapport au plan du sol dans lequel est enterrée la chambre.

Ce dispositif de chambre de raccordement connu a pour inconvénient que le cadre métallique, une fois qu'il est réglé à sa position à laquelle le tampon est en affleurement avec la chaussée, laisse subsister une partie creuse entre la chambre et le cadre métallique. Dans conditions, lors de la circulation de véhicules sur le tampon, le cadre métallique risque de se déformer et la stabilité du ou des tampons sera perturbée, rendant le dispositif extrêmement bruyant.

De même, le document EP 2 924 832 divulgue une chambre souterraine pouvant être formée par assemblage de plusieurs composants ayant des hauteurs différentes ou ayant une capacité de réglage en hauteur. Le document FR 2 520 028 divulgue un dispositif de cadre et tampon comportant un volume périphérique ouvert dans lequel peut être coulé du béton pour sceller le dispositif dans le sol. La présente invention a pour but de palier l'inconvénient ci-dessus du dispositif de chambre de raccordement connu.

A cet effet, l'invention propose une tête de chambre de raccordement selon la revendication 1.

Selon un mode de réalisation, les organes de réglage en hauteur comprennent des cales interposées entre le cadre de coffrage et le fond de la partie évidée périphérique précitée.

Selon un autre mode de réalisation, les organes de réglage en hauteur comprennent des vis solidaires du cadre de coffrage et qui sont en appui au fond de la partie évidée périphérique précitée.

Selon encore un autre mode de réalisation, la partie évidée périphérique de la tête de chambre est délimitée entre une paroi latérale périphérique externe et une paroi dressée interne périphérique délimitant elle-même l'ouverture centrale de la tête de chambre apte à communiquer avec la chambre et les organes de réglage en hauteur du cadre de coffrage comprennent des vis solidaires du cadre de coffrage et qui sont en appui sur un bord plat supérieur de la paroi interne périphérique.

De préférence, le cadre de coffrage présente en section transversale une forme en équerre, dont l'une des branches est parallèle au fond de la partie évidée et sert de support au cadre de réception du tampon et l'autre branche adjacente à la paroi interne périphérique parallèlement à celle-ci comporte plusieurs pattes en saillie au-dessus du bord plat supérieur de la paroi interne périphérique ou au-dessus du fond de la partie évidée périphérique et qui sont traversées perpendiculairement par les vis de réglage ou comportent sous celles-ci les cales de réglage.

La partie évidée interne périphérique de la tête de chambre comporte une feuillure formée dans la paroi latérale périphérique externe et définissant avec la paroi interne périphérique un espace dans lequel peut être logée l'autre branche du cadre de coffrage et dans laquelle feuillure peut être logé en partie le cadre de réception du tampon.

La paroi latérale périphérique externe de la tête de chambre comprend des réservations dans lesquelles peuvent être scellées, par du béton coulé dans la partie évidée du cadre de réception du tampon de la tête de chambre, des pattes afin de sceller le cadre de réception du tampon dans la tête de chambre.

La tête de chambre est réalisée en matériau composite ou plastique.

La tête de chambre présente une forme générale rectangulaire.

La tête de chambre peut être maintenue à sa position de pose sur la chambre par des vis traversant des pattes inférieures de la tête de chambre et aptes à venir en appui serré sur les faces externes correspondantes de l'élément préfabriqué supérieur de la chambre perpendiculairement à celles-ci.

L'invention vise également un dispositif de chambre de raccordement destiné à être enterré dans le sol comprenant une chambre dans laquelle peuvent être logés des moyens de raccordement de câbles électriques, notamment de courants faibles, ou tout autre type de câble de communication, d'un réseau souterrain de distribution et une tête de chambre posée sur la chambre et caractérisé en ce que la tête de chambre est telle que précédemment décrite.

La chambre comprend plusieurs éléments superposés et préfabriqués en matériau composite et le cadre de réception du tampon est en métal, tel que de l'acier galvanisé, de la fonte ou en matériau composite.

La chambre, la tête de chambre, le cadre de coffrage et le cadre de réception du tampon sont rectangulaires.

La tête de chambre est maintenue à sa position de pose sur la chambre par des vis traversant des pattes inférieures de la tête de chambre en venant en appui serré sur les faces externes correspondantes de l'élément préfabriqué supérieur de la chambre perpendiculairement à celles-ci.

La chambre est fermée à sa partie inférieure par une paroi plane fixée dans cette partie inférieure par des vis.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
- La figure 1 est une vue en perspective éclatée du dispositif de chambre de raccordement suivant un premier mode de réalisation de l'invention ;
- la figure 2 est une vue de dessus suivant la flèche II de la figure 1 ;
- la figure 3 est une vue en coupe suivant la ligne III-III de la figure 2 ;
- la figure 4 est une vue en coupe suivant la ligne IV-IV de la figure 2 ;
- la figure 5 est une vue en perspective de la tête de chambre du dispositif de raccordement de chambre de l'invention ;
- la figure 6 est une vue de dessus de la tête de chambre de la figure 5 ;
- la figure 7 est une vue en coupe suivant la ligne VII-VII de la figure 6 ;
- la figure 8 est une vue en coupe semblable à celle de la figure 7 et montrant une hauteur de réglage d'un cadre de coffrage différente de celle du cadre de coffrage de la figure 7 ;
- la figure 9 est une vue en perspective d'un second mode de réalisation du dispositif de chambre de raccordement de l'invention,
- la figure 10 est une vue en perspective d'un ensemble assemblé à tête de chambre, cadre de coffrage et cadre de réception d'au moins un tampon selon un autre mode de réalisation de l'invention,
- la figure 11 est une vue en coupe suivant la ligne XI-XI de la figure 10,
- la figure 12 est une vue en perspective d'un ensemble assemblé à tête de chambre, cadre de coffrage et cadre de réception d'au moins un tampon selon encore un autre mode de réalisation de l'invention, et
- la figure 13 est une vue en coupe suivant la ligne XIII-XIII de la figure 12.

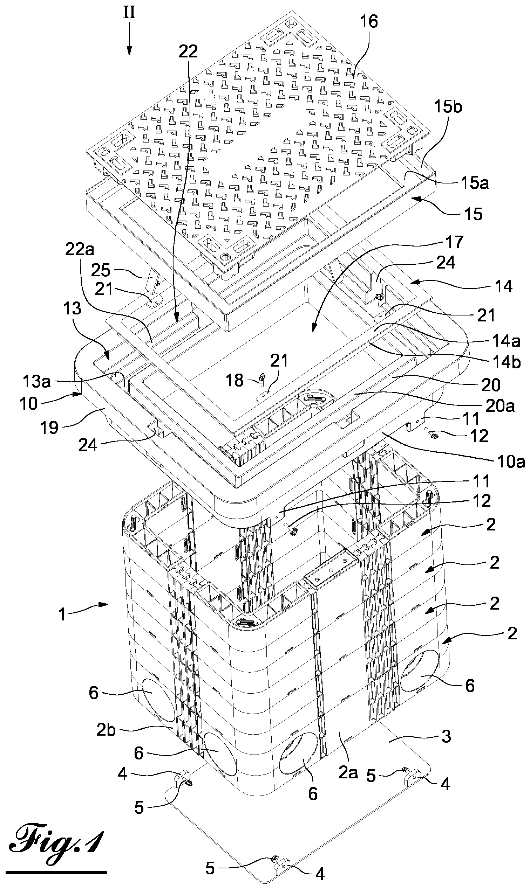

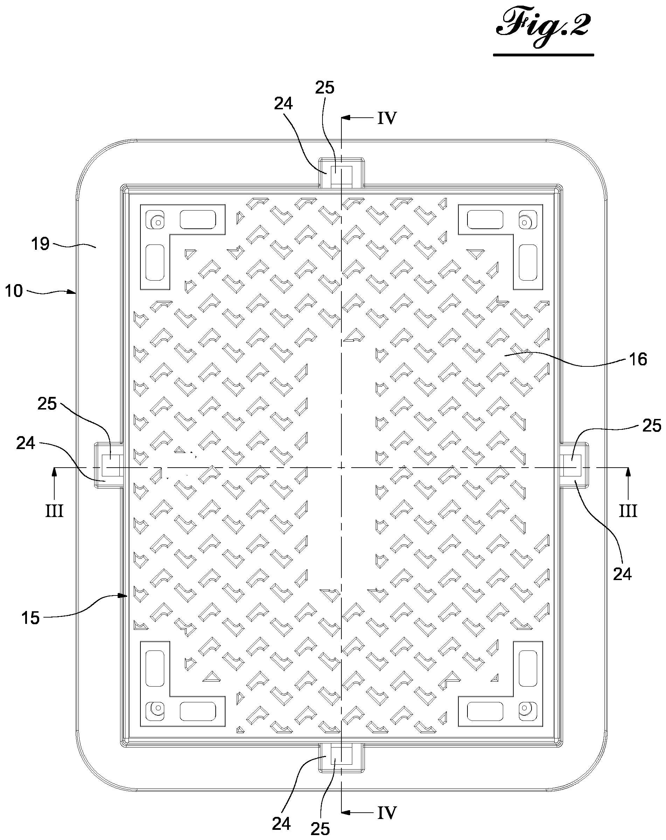

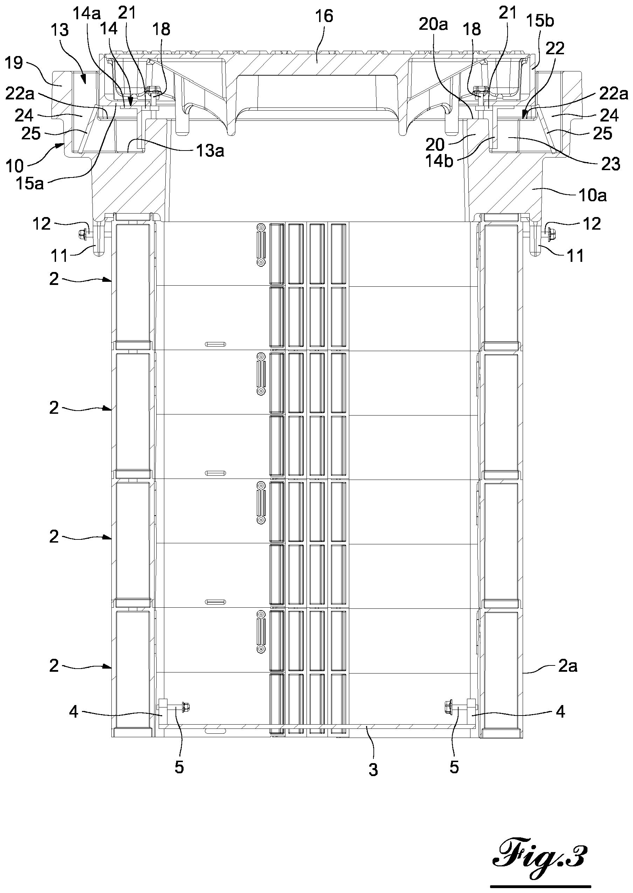

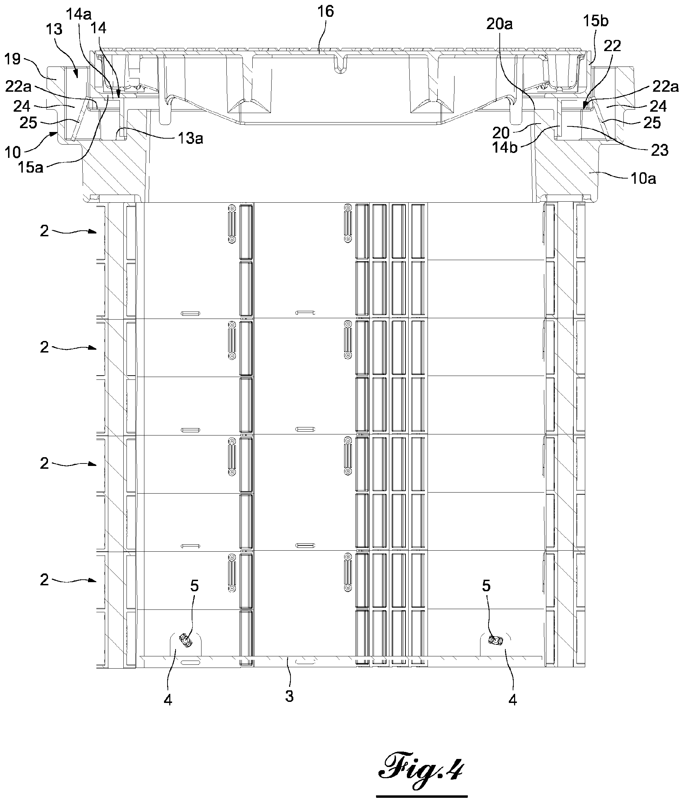

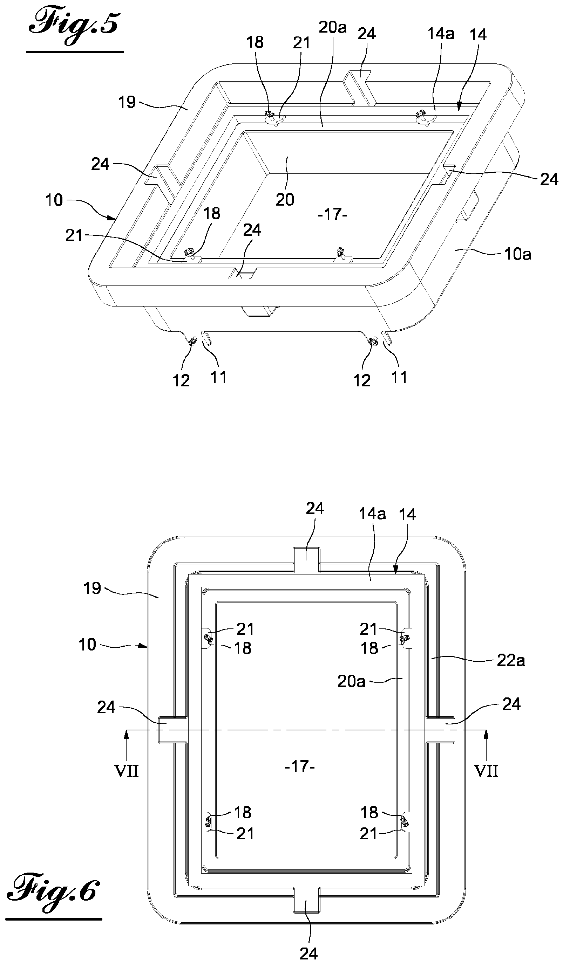

Les figures 1 à 8 représentent un premier mode de réalisation du dispositif de chambre de raccordement de l'invention.

Un tel dispositif de chambre de raccordement est un ouvrage civil souterrain disposé à la jonction des réseaux d'électricité et/ou de télécommunication pour y réaliser des raccordements.

Le dispositif de chambre de raccordement comprend une chambre 1 destinée à être logée dans un trou pratiqué dans le sol et dans laquelle peuvent être logés des moyens de raccordement de fils ou câbles électriques du réseau souterrain de distribution.

Dans le cas présent, la chambre 1 comprend une pluralité d'éléments préfabriqués et jointivement superposés 2 présentant chacun une forme générale de cadre rectangulaire, dont l'élément 2 le plus bas est obturé par une paroi plane de fond 3 amoviblement fixée dans cet élément en partie inférieure de celui-ci. A cet effet, la paroi de fond 3 comporte quatre pattes 4 solidaires de la plaque 3 en faisant saillie d'une même face interne de celle-ci perpendiculairement à la paroi 3 et quatre vis 5 vissées respectivement au travers des quatre pattes 4 pour venir en appui serré sur les deux faces internes parallèles des deux grands côtés parallèles 2a de l'élément inférieur 2 et, par conséquent, fixer la paroi 3 dans la partie inférieure de cet élément.

Bien entendu, les éléments superposés 2 de la chambre 1 peuvent présenter chacun une forme générale de cadre carré ou de cadre circulaire.

Les éléments superposés 2 viennent de préférence de moulage d'un matériau composite ou plastique.

L'élément inférieur 2 de la chambre 1 est pourvu dans chacun de ses deux grands côtés 2a et deux petits côtés 2b de perçages 6 pouvant être traversés par des gaines dans lesquelles sont logés des câbles électriques, notamment de courants faibles, ou tout autre type de câble de communication destinés à être raccordés aux moyens de raccordement présents dans la chambre 1. Dans de tels câbles de communication peuvent circuler des informations du type audio et/ou vidéo et/ou données.

Ainsi, une personne peut au besoin intervenir dans la chambre 1 pour effectuer des opérations de maintenance ou de réparation.

La structure des différents éléments 2 de la chambre 1 ainsi que les différents moyens permettant de les assembler superposés les uns au-dessus des autres sont décrits plus en détails dans la demande de brevet internationale WO 2013/178644, de sorte qu'il est inutile de les décrire à nouveau.

De préférence, les éléments 2 de la chambre 1 sont préfabriqués en matériau composite.

Le dispositif de chambre de raccordement comprend également une tête de chambre 10 présentant une forme générale de cadre rectangulaire et qui est posée sur l'élément supérieur 2 de la chambre 1 en étant maintenue à cet élément par des moyens appropriés constitués dans le cas présent par quatre pattes 11 solidaires respectivement des deux grands côtés du cadre de la tête de chambre 10 en faisant saillie vers le bas en partie inférieure de cette tête et quatre vis 12 vissées au travers respectivement des quatre pattes 11 de manière à venir en appui serré sur les deux faces externes des deux grands côtés 2a de l'élément supérieur 2 perpendiculairement à ces faces.

La tête de chambre 10 comprend une partie évidée périphérique interne 13 de forme rectangulaire destinée à loger un cadre de coffrage de forme générale rectangulaire 14 et un cadre de forme générale rectangulaire 15 pouvant recevoir un tampon rectangulaire 16 de fermeture de l'ouverture du cadre 15 et, par conséquent, de l'ouverture centrale 17 de la tête de chambre 10 communiquant avec l'intérieur de la chambre 1. Le cadre 15 peut recevoir deux ou plusieurs tampons 16 d'obturation de ce cadre, par exemple deux tampons en triangles rectangles juxtaposés par leurs hypoténuses à leur position de fermeture du cadre 15. En variante, la tête de chambre 10 et les deux cadres 14, 15 peuvent être circulaires, le tampon 16 étant alors circulaire. Le cadre 15 peut être réalisé en métal, tel que de l'acier galvanisé, de la fonte ou en matériau composite.

Le cadre de coffrage 14 et le cadre 15 de réception du tampon 16 sont logés dans la partie évidée périphérique interne 13 de la tête de chambre 10 de manière que le cadre 15 repose sur le cadre de coffrage 14 qui comprend des organes 18 de réglage en hauteur relativement au fond 13a de la partie évidée périphérique interne 13 du cadre 15 pour positionner le bord supérieur du cadre 15 et, par conséquent, le tampon 16, en affleurement avec le sol dans le lequel sont enterrées la chambre 1 et la tête de chambre 10.

La partie évidée périphérique interne 13 de la tête de chambre 10 est délimitée entre une paroi latérale périphérique externe 19 de la tête de chambre 10 et une paroi dressée interne périphérique 20 de forme rectangulaire et délimitant elle-même l'ouverture centrale 17 de la tête de chambre 10.

De préférence, la tête de chambre 10 est obtenue par moulage d'un matériau composite ou plastique.

La paroi latérale 19 surmonte une jupe rectangulaire 10a de la tête de chambre comportant les quatre pattes 11 destinées au maintien de cette tête sur les éléments 2 par les vis 12.

Le cadre de coffrage 14 présente en section transversale une forme en équerre, dont l'une 14a des deux branches 14a, 14b est parallèle au fond 13a de la partie évidée 13 au dessus de ce fond et l'autre branche 14b est adjacente à la paroi interne périphérique 20 parallèlement à celle-ci en ayant une hauteur supérieure à la hauteur de la paroi périphérique interne 20 par rapport au fond 13a de la partie évidée périphérique 13.

La branche plane périphérique 14a du cadre de coffrage 14 sert de support au cadre 15 et l'autre branche périphérique 14b du cadre de coffrage 14 comporte plusieurs pattes 21, dans le cas illustré au nombre de quatre, faisant saillie à l'intérieur du cadre de coffrage 14 en étant située sensiblement en affleurement avec la branche périphérique 14a de ce cadre. Ainsi, l'une des parties de la branche périphérique 14b comporte deux pattes 21 et l'autre partie parallèle de cette branche périphérique comporte les deux autres pattes 21, lesquelles pattes 21 font saillie à l'intérieur du cadre de coffrage 14.

La branche périphérique 14a du cadre de coffrage 14 s'étend au-dessus du bord plat rectangulaire supérieur 20a de la paroi interne périphérique 20 parallèlement à ce bord plat et les pattes 21 du cadre de coffrage 14 sont traversées respectivement par des vis de réglage 18 constituant les organes de réglage de position du cadre de coffrage 14 relativement au fond 13a de la partie évidée périphérique 13 de la tête de chambre 10. Les vis de réglage 18 s'étendent perpendiculairement au bord plat 20a de la paroi interne périphérique 20 et viennent en appui par leurs extrémités opposées à leurs têtes sur le bord plat 20a pour permettre un réglage en hauteur du cadre de coffrage 14 relativement au bord 20a et donc par rapport au fond 13a de la partie évidée périphérique 13.

La partie évidée interne périphérique 13 de la tête de chambre 10 comporte une feuillure 22 formée dans la paroi latérale périphérique 19 de la tête de chambre 10 et définissant avec la paroi interne périphérique 20 un espace périphérique rectangulaire 23 entourant la paroi 20 et dans lequel est logée en grande partie la branche périphérique 14b du cadre de coffrage 14.

La branche périphérique 14a du cadre de coffrage 14 est toujours située à une hauteur supérieure par rapport au fond 22a de la feuillure 22.

Le cadre 15 comprend une paroi périphérique interne rectangulaire 15a définissant une ouverture rectangulaire et servant d'assise au tampon 16.

Lorsque le cadre 15 est supporté par le cadre de coffrage 14, la paroi d'assise 15a est en appui sur la branche périphérique 14a du cadre de coffrage 14 de sorte que le cadre 15 est logé en partie dans la feuillure 22 avec la paroi d'assise 15a espacée d'au-dessus du fond 22a de la feuillure 22 avec une partie de la paroi latérale 15b du cadre 15 faisant saillie au-dessus du bord supérieur de la paroi périphérique externe 19 de la tête de chambre 10.

La tête de chambre 10 comprend en outre des réservations 24 formées dans la paroi latérale externe 19 et au travers de la feuillure 22. Dans le cas présent, quatre réservations 24 sont formées respectivement dans les deux grands côtés et les deux petits côtés de la paroi latérale externe 19 de la tête de chambre 10.

Le cadre 15 comprend quatre pattes 25 solidaires du bord inférieur de la paroi latérale périphérique 15b de ce cadre en faisant saillie en dessous de sa paroi d'assise 15a et s'étendant obliquement vers l'extérieur par rapport au plan de chaque côté de la paroi latérale 15b. Les pattes 25 s'étendent obliquement à partir du milieu de chaque côté de la paroi latérale 15b.

Les pattes 25 sont logées respectivement dans les quatre réservations 24 de la tête de chambre 10 lorsque le cadre 15 est en appui sur le cadre de coffrage 14 pour permettre le scellement de ces pattes dans les réservations 24 par du béton coulé dans la partie évidée périphérique 13 de la tête de chambre 10 afin de sceller le cadre 15 dans la tête de chambre 10.

Il est à noter qu'une fois le cadre 15 posé sur la branche 14a du cadre de coffrage 14, les vis de réglage 18 sont situées dans l'ouverture du cadre 15 délimitée par sa paroi d'assise 15a de manière que ces vis soient accessibles de l'extérieur pour effectuer le réglage de position du cadre 15 en affleurement avec le sol ou la chaussée.

L'installation du dispositif de chambre de raccordement ci-dessus décrit de l'invention s'effectue comme suit.

L'ensemble constitué par les éléments superposés 2 de la chambre 1 et la tête de chambre 10 posée et maintenue sur l'élément supérieur 2 de la chambre 1 par l'intermédiaire des vis de maintien 12 est enterré dans le sol.

Ensuite, l'opérateur introduit le cadre de coffrage 14 dans la tête de chambre 10 de manière que les vis de réglage 18 soient en appui sur le bord supérieur 20a de la paroi périphérique interne 20 de la tête de chambre 10 avec la branche périphérique 14b de ce cadre située à proximité de la paroi 20a à l'extérieur de celle-ci et dans l'espace périphérique 23, l'extrémité inférieure de la branche périphérique 14b ne contactant pas le fond 13a de la partie évidée périphérique 13.

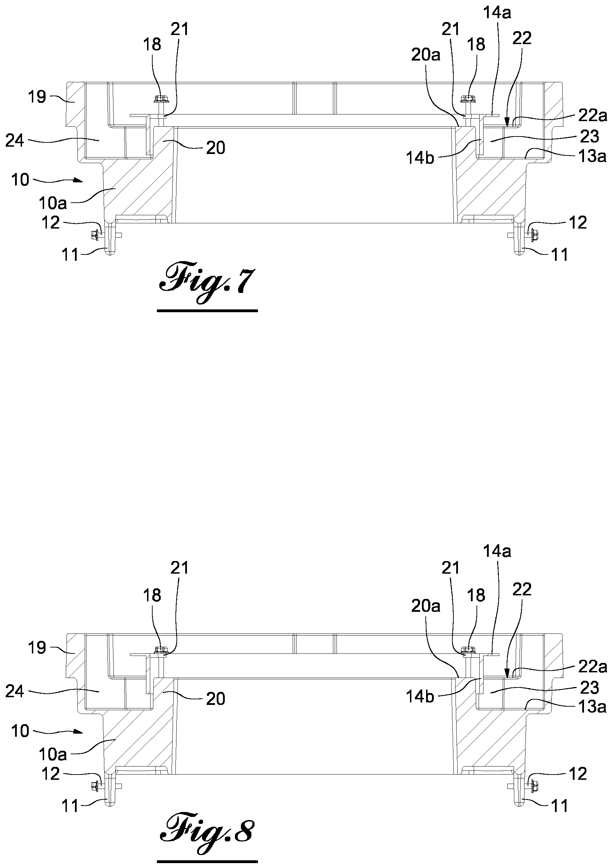

Puis l'opérateur dispose le cadre 15 sur la branche horizontale périphérique 14a du cadre de coffrage 14 et effectue à l'aide des vis 18 le réglage en hauteur du cadre 15 relativement au fond 13a de la partie évidée périphérique 13 de la tête de chambre 10 afin que le bord supérieur de la paroi latérale 15b du cadre 15 soit réglé à un niveau correspondant à celui en affleurement avec le sol ou la chaussée environnant. Les figures 7 et 8 représentent deux positions extrêmes de réglage en hauteur par les vis 18 du cadre de coffrage 14 respectivement basse et haute auxquelles la branche périphérique 14b de ce cadre est proche du fond 13a (figure 7) et cette branche est la plus éloignée de ce fond (figure 8).

Lors de la pose du cadre 15 sur le cadre de coffrage 14, les pattes 25 sont introduites respectivement dans les réservations 24 de la tête de chambre 10.

L'opérateur coule enfin du béton dans la partie évidée périphérique 13 et dans les réservations 24 de la tête de chambre 10 de manière à sceller définitivement le cadre 15 dans la tête de chambre 10. Il est à noter que lors de la coulée du béton, la branche périphérique 14b du cadre de coffrage 14 empêche le béton de s'écouler dans l'ouverture centrale 17 de la tête de chambre 10.

Le cadre de coffrage 14 peut être en matériau composite voire même en une matière plastique, le matériau de ce cadre ne revêtant peu d'importance du fait de sa fonction provisoire de réglage en hauteur du cadre 15, le cadre de coffrage 14 n'ayant plus d'utilité une fois le béton durci dans la tête de chambre 10.

Le béton, une fois durci, assure une interface continue entre la tête de chambre 10 et le cadre 15, garantissant une stabilité dans le temps du ou des tampons logés dans le cadre 15 et, par conséquent, une longévité accrue du dispositif de chambre de raccordement.

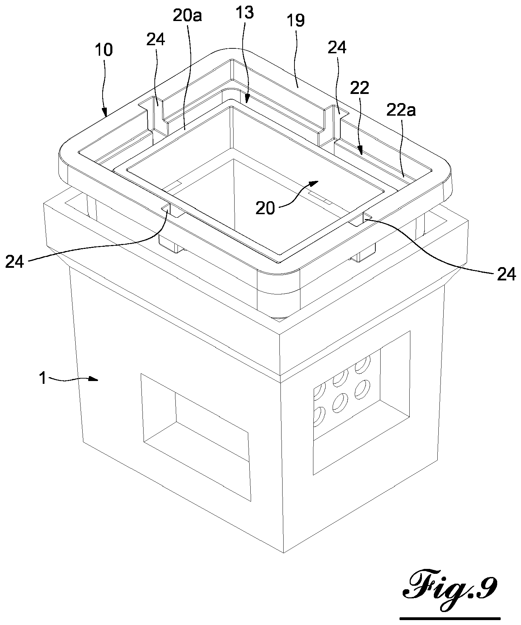

La figure 9 représente un second mode de réalisation du dispositif de chambre de raccordement de l'invention où la tête de chambre 10, identique à celle précédemment décrite, est logée dans la partie supérieure d'une chambre classique en béton 1 destinée à être enterrée dans le sol. Dans ce mode de réalisation, le cadre de coffrage supportant le cadre 15 de réception d'un ou plusieurs tampons ne sont pas représentés, mais il est bien entendu que la tête de chambre 10 est apte à recevoir ces deux cadres pour régler la position en hauteur du cadre 15 en affleurement avec la chaussée ou le trottoir comme décrit précédemment en liaison avec le premier mode de réalisation.

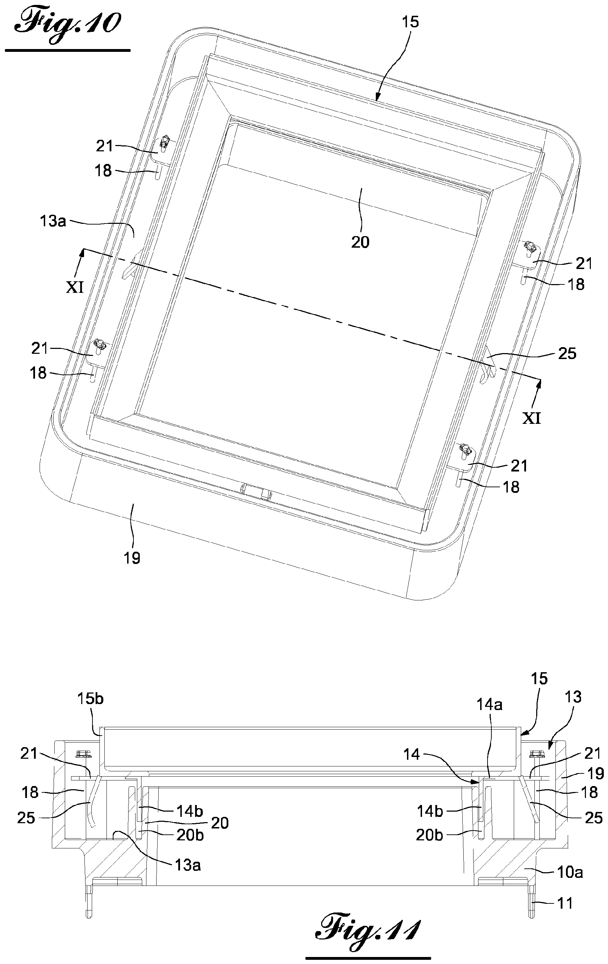

Les figures 10 et 11 représentent un autre mode de réalisation permettant de régler la hauteur du cadre de coffrage 14 relativement à la tête de chambre 10 et, par conséquent, du cadre 15 de réception du tampon, non représenté, supporté par le cadre de coffrage 14.

Les éléments ou composants de la tête de chambre 10 et des cadres 14 et 15 identiques et/ou accomplissant les mêmes fonctions que ceux précédemment décrits portent les mêmes références et ne seront pas à nouveau décrits.

Selon ce mode de réalisation, les pattes 21 également au nombre de quatre dans le cas illustré, sont solidaires non seulement des deux parties parallèles et opposées de la branche périphérique 14b du cadre de coffrage 14 mais également des deux parties correspondantes de la branche périphérique 14a du cadre de coffrage 14 en faisant saillie à l'extérieur de ce cadre.

Ainsi, en position assemblée du cadre 15 de réception du tampon et du cadre de coffrage 14 dans la partie évidée interne périphérique 13 de la tête de chambre 10 et à laquelle le cadre 15 repose sur la branche périphérique 14a du cadre 14, les deux paires de pattes 21 situées de chaque côté du cadre de coffrage 14 sont situées au-dessus du fond 13a de la partie évidée 13 et parallèlement à ce fond.

Chacune des pattes 21 est traversée par une vis 18 dont l'extrémité opposée à la tête de vis vient en appui sur le fond 13a de la partie évidée 13 pour permettre le réglage en hauteur relativement à ce fond du cadre de coffrage 14 et du cadre 15 de réception du tampon de manière à positionner le bord supérieur du cadre 15 en affleurement avec le sol dans lequel sont enterrées la chambre 1 et la tête de chambre 10.

Il est en outre à noter que la branche périphérique 14b du cadre de coffrage 14, au lieu d'être à l'extérieur de la paroi périphérique 20, est logée dans une rainure périphérique rectangulaire 20b formée dans la paroi périphérique 20 sur une profondeur portant du bord supérieur plat 20a de la paroi 20 jusqu'au niveau du fond 13a de la partie évidée 13. Ainsi, le cadre de coffrage 14 peut être réglé en hauteur de manière guidée relativement à la paroi périphérique 20.

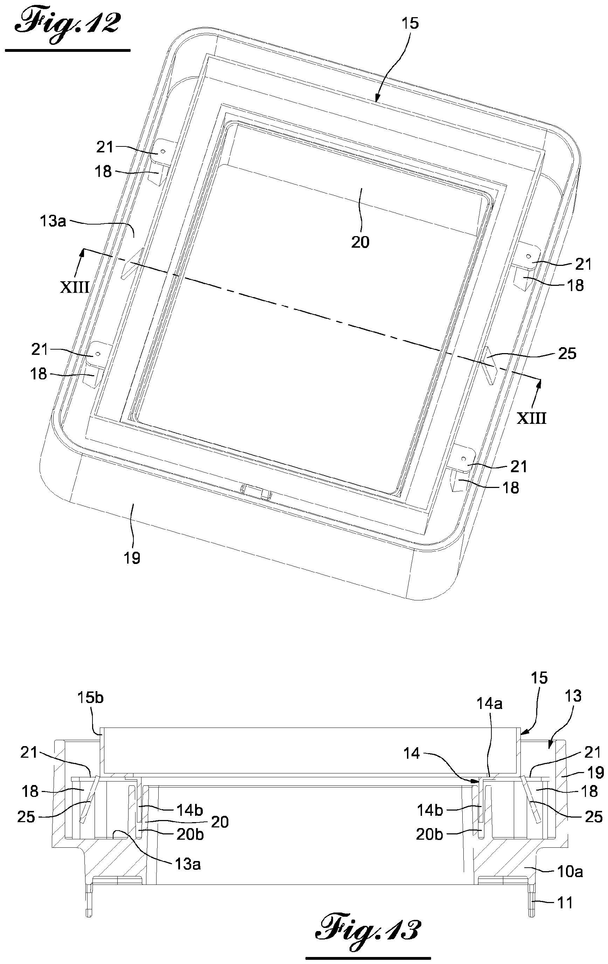

Les figures 12 et 13 représentant une variante de réalisation de la tête de chambre des figures 10 et 11.

La seule différence par rapport aux figures 10 et 11 est que les moyens de réglage en hauteur du cadre de coffrage 14 relativement au fond 13a de la partie évidée 13, au lieu d'être constitués par des vis, sont formés par des cales 18 qui peuvent être solidaires des pattes 21 externes au cadre 14 respectivement des deux parties parallèles et opposées des branches périphériques 14a, 14b du cadre 14 sous celles-ci et venant en appui sur le fond 13a. Les cales 18 peuvent être métalliques ou en matériau composite suivant le matériau du cadre de coffrage 14 et peuvent être ainsi fixées sous les deux branches opposées 14a du cadre 14 par soudage, par collage ou venir de matière avec ce cadre. En variante, les cales 18 peuvent être indépendantes du cadre de coffrage 14, c'est-à-dire non solidaires de celui-ci et interposées entre le cadre de coffrage 14 et le fond 13a de la partie évidée 13. Ainsi, plusieurs jeux de cales de hauteurs différentes peuvent être prévus pour régler correctement la hauteur du cadre 14 et, par conséquent, du cadre 15 pour que ce dernier soit en affleurement avec la chaussée.

Selon une variante non représentée, les cales 18 pourraient être disposées sous les pattes internes 21 du cadre de coffrage 14 en venant en appui sur le bord périphérique plat 20a de la paroi périphérique 20 au lieu et place des vis de réglage 18 comme dans les figures 1 à 8.

L'invention propose ainsi un dispositif de chambre de raccordement dont la tête de chambre est pourvue d'un cadre de coffrage adapté sur lequel reposera le cadre de réception du ou des tampons avant scellement, lequel cadre de coffrage permettra de régler le niveau du cadre de réception du ou des tampons afin qu'il soit parfaitement aligné avec la chaussée ou le trottoir.

## Revendications

1. Tête de chambre de raccordement (10) destinée à être enterrée dans le sol en étant posée sur une chambre (1) dans laquelle peuvent être logés des moyens de raccordement de fils câbles électriques, notamment de courants faibles, ou tout autre type de câble de communication d'un réseau souterrain de distribution, qui comprend un cadre de coffrage (14), un cadre (15) de réception d'un tampon (16) de fermeture de la tête de chambre (10), une partie évidée périphérique interne (13) destinée à loger le cadre de coffrage (14) et le cadre (15) de réception du tampon (16) reposant sur le cadre de coffrage (14)
et qui comporte des organes (18) de réglage en hauteur du cadre (15) de réception du tampon (16) lorsque porté par le cadre de coffrage (14) pour positionner un bord supérieur du cadre (15) de réception du tampon (16) en affleurement avec le sol dans lequel sont enterrées la chambre (1) et la tête de chambre (10), les organes (18) de réglage en hauteur étant adaptés au réglage en hauteur du cadre (15) relativement au fond (13a) de la partie évidée périphérique (13),
dans laquelle la partie évidée périphérique (13) est délimitée entre une paroi latérale périphérique externe (19) et une paroi dressée interne périphérique (20) délimitant elle-même l'ouverture centrale (17) de la tête de chambre (10) apte à communiquer avec la chambre (1), et
le cadre de coffrage (14) présente en section transversale une forme en équerre, dont l'une (14a) des branches périphériques est parallèle au fond (13a) de la partie évidée (13) et sert de support au cadre (15) de réception du tampon (16) et l'autre branche périphérique (14b) adjacente à la paroi interne périphérique (20) parallèlement à celle-ci comporte plusieurs pattes (21) en saillie au-dessus du bord plat supérieur (20a) de la paroi interne périphérique (20) ou au-dessus du fond (13a) de la partie évidée périphérique (13) et qui sont traversées perpendiculairement par les organes de réglage (18) en hauteur ou comportent sous elles lesdits organes de réglage (18) en hauteur.

2. Tête de chambre (10) selon la revendication 1, **caractérisée en ce que** les organes de réglage en hauteur comprennent des cales (18) interposées entre le cadre de coffrage (14) et le fond (13a) de la partie évidée périphérique (13).

3. Tête de chambre (10) selon la revendication 1, **caractérisée en ce que** les organes de réglages en hauteur comprennent des vis (18) solidaires du cadre de coffrage (14) et qui sont en appui au fond (13a) de la partie évidée périphérique (13).

4. Tête de chambre (10) selon la revendication 1, **caractérisée en ce que** les organes de réglage en hauteur du cadre de coffrage comprennent des vis (18) solidaires du cadre de coffrage (14) et qui sont en appui sur un bord plat supérieur (20a) de la paroi interne périphérique (20).

5. Tête de chambre (10) selon l'une des revendications précédentes, **caractérisée en ce que** la partie évidée interne périphérique (13) de la tête de chambre (10) comporte une feuillure (22) formée dans la paroi latérale périphérique externe (19) et définissant avec la paroi interne périphérique (20) un espace (23) dans lequel peut être logée l'autre branche périphérique (14b) du cadre de coffrage (14) et dans laquelle feuillure (22) peut être logé en partie le cadre (15) de réception du tampon (16).

6. Tête de chambre (10) selon l'une des revendications 1 à 5, **caractérisée en ce que** la paroi latérale périphérique externe (19) de la tête de chambre (10) comprend des réservations (24) dans lesquelles peuvent être scellées, par du béton coulé dans la partie évidée (13) du cadre (15) de réception du tampon (16) de la tête de chambre (10), des pattes (25) afin de sceller le cadre (15) de réception du tampon (16) dans la tête de chambre (10).

7. Tête de chambre (10) selon l'une des revendications 1 à 6, **caractérisée en ce qu'**elle est réalisée en matériau composite ou plastique.

8. Tête de chambre (10) selon l'une des revendications 1 à 7, **caractérisée en ce qu'**elle présente une forme générale rectangulaire.

9. Tête de chambre (10) selon l'une des revendications 1 à 8, **caractérisée en ce qu'**elle peut être maintenue à sa position de pose sur la chambre (1) par des vis (12) traversant des pattes inférieures (11) de la tête de chambre (10) et aptes à venir en appui serré sur les faces externes correspondantes de l'élément préfabriqué supérieur (2) de la chambre (1) perpendiculairement à celles-ci.

10. Dispositif de chambre de raccordement (10) destiné à être enterré dans le sol comprenant une chambre (1) dans laquelle peuvent être logés des moyens de raccordement de câbles électriques, notamment de courants faibles, ou tout autre type de câble de communication d'un réseau souterrain de distribution et une tête de chambre (10) posée sur la chambre (1), **caractérisé en ce que** la tête de chambre (10) est conforme à l'une quelconque des revendications 1 à 10.

11. Dispositif de chambre de raccordement selon la revendication 10, **caractérisé en ce que** la chambre (1) comprend plusieurs éléments superposés (2) et préfabriqués en matériau composite, et le cadre (15) de réception du tampon (16) est métallique.

12. Dispositif de chambre de raccordement selon la revendication 10 ou 11, **caractérisé en ce que** la chambre (1), la tête de chambre (10), le cadre de coffrage (14) et le cadre (15) de réception du tampon (16) sont rectangulaires.

13. Dispositif de chambre de raccordement selon la revendication 11 ou 12, **caractérisé en ce que** la tête de chambre (10) est maintenue à sa position de pose sur la chambre (1) par des vis (12) traversant des pattes inférieures (11) de la tête de chambre (10) en venant en appui serré sur les faces externes correspondantes de l'élément préfabriqué supérieur (2) de la chambre (1) perpendiculairement à celles-ci.

14. Dispositif de chambre de raccordement selon l'une des revendications 10 à 13, **caractérisé en ce que** la chambre (1) est fermée à sa partie inférieure par une paroi plane (3) fixée dans cette partie inférieure par des vis (5).

## Patentansprüche

1. Anschlussschachtkopf (10), der dazu bestimmt ist, im Boden vergraben zu werden, indem er auf einen Schacht (1) aufgesetzt wird, in welchem Mittel zum Anschluss von elektrischen Leitungen, insbesondere von Schwachstromleitungen, oder jede andere Art von Kommunikationskabel eines unterirdischen Verteilungsnetzes untergebracht werden können, enthaltend einen Schalungsrahmen (14), einen Aufnahmerahmen (15) zum Aufnehmen eines Schließdeckels (16) zum Verschließen des Schachtkopfes (10), einen innen liegenden, umlaufenden, ausgesparten Abschnitt (13) zum Aufnehmen des Schalungsrahmens (14) und des Aufnahmerahmens (15) zum Aufnehmen des Deckels (16), der auf dem Schalungsrahmen (14) aufliegt und Höhenverstellorgane (18) zum Verstellen der Höhe des Aufnahmerahmens (15) zum Aufnehmen des Deckels (16), wenn dieser von dem Schalungsrahmen (14) abgestützt wird, aufweist, um eine Oberkante des Aufnahmerahmens (15) zum Aufnehmen des Deckels (16) bündig mit dem Boden zu positionieren, in welchem der Schacht (1) und der Schachtkopf (10) vergraben sind, wobei die Höhenverstellorgane (18) dazu ausgelegt sind, den Aufnahmerahmen (15) relativ zum Grund (13a) des umlaufenden, ausgesparten Abschnitts (13) in der Höhe zu verstellen, wobei der umlaufende, ausgesparte Abschnitt (13) zwischen einer umlaufenden, äußeren Seitenwand (19) und einer aufgestellten, inneren Umfangswand (20) eingegrenzt ist, die ihrerseits die mittige Öffnung (17) des Schachtkopfes (10) eingrenzt, die mit dem Schacht (1) in Verbindung stehen kann, und wobei der Schalungsrahmen (14) eine eckige Querschnittsform aufweist, von welcher einer (14a) der umlaufenden Schenkel parallel zum Grund (13a) des ausgesparten Abschnitts (13) verläuft und als Stütze für den Aufnahmerahmen (15) zum Aufnehmen des Deckels (16) dient und der andere umlaufende Schenkel (14b), der an die innere Umfangswand (20) parallel zu dieser angrenzt, mehrere Laschen (21) aufweist, die über die flache Oberkante (20a) der inneren Umfangswand (20) oder über den Grund (13a) des umlaufenden, ausgesparten Abschnitts (13) hinausragen und die von den Höhenverstellorganen (18) senkrecht durchdrungen werden oder die Höhenverstellorgane (18) darunter aufweisen.

2. Schachtkopf (10) nach Anspruch 1, **dadurch gekennzeichnet, dass** die Höhenverstellorgane Keile (18) enthalten, die zwischen dem Schalungsrahmen (14) und dem Grund (13a) des umlaufenden, ausgesparten Abschnitts (13) angeordnet sind.

3. Schachtkopf (10) nach Anspruch 1, **dadurch gekennzeichnet, dass** die Höhenverstellorgane Schrauben (18) aufweisen, die fest mit dem Schalungsrahmen (14) verbunden sind und die am Grund (13a) des umlaufenden, ausgesparten Abschnitts (13) anliegen.

4. Schachtkopf (10) nach Anspruch 1, **dadurch gekennzeichnet, dass** die Höhenverstellorgane zur Höhenverstellung des Schalungsrahmens Schrauben (18) aufweisen, die fest mit dem Schalungsrahmen (14) verbunden sind und an einer flachen Oberkante (20a) der inneren Umfangswand (20) anliegen.

5. Schachtkopf (10) nach einem der vorangehenden Ansprüche, **dadurch gekennzeichnet, dass** der innen liegende umlaufende, ausgesparte Abschnitt (13) des Schachtkopfes (10) einen Falz (22) aufweist, der in der äußeren, umlaufenden Seitenwand (19) ausgebildet ist und mit der inneren Umfangswand (20) einen Raum (23) definiert, in dem der andere umlaufende Schenkel (14b) des Schalungsrahmens (14) aufgenommen werden kann, wobei in dem Falz (22) der Aufnahmerahmen (15) zum Aufnehmen des Deckels (16) teilweise aufgenommen werden kann.

6. Schachtkopf (10) nach einem der Ansprüche 1 bis 5, **dadurch gekennzeichnet, dass** die äußere, umlaufende Seitenwand (19) des Schachtkopfes (10) Aussparungen (24) aufweist, in denen Laschen (25) zum Abdichten des Aufnahmerahmens (15) zum Aufnehmen des Deckels (16) im Schachtkopf (10) durch Beton abgedichtet werden können, der in den ausgesparten Abschnitt (13) des Aufnahmerahmens (15) zum Aufnehmen des Deckels (16) des Schachtkopfes (10) eingegossen ist.

7. Schachtkopf (10) nach einem der Ansprüche 1 bis 6, **dadurch gekennzeichnet, dass** er aus Verbund- oder Kunststoffmaterial hergestellt ist.

8. Schachtkopf (10) nach einem der Ansprüche 1 bis 7, **dadurch gekennzeichnet, dass** er eine rechteckige Form hat.

9. Schachtkopf (10) nach einem der Ansprüche 1 bis 8, **dadurch gekennzeichnet, dass** er in seiner Einbaulage an dem Schacht (1) mittels Schrauben (12) gehalten werden kann, die durch untere Laschen (11) des Schachtkopfes (10) hindurchgehen und die eng an den entsprechenden Außenflächen des vorgefertigten oberen Elements (2) des Schacht (1) senkrecht zu diesen Flächen in Anlage kommen können.

10. Anschlussschachtvorrichtung (10), die dazu bestimmt ist, im Boden vergraben zu werden, enthaltend einen Schacht (1), in den Mittel zum Anschluss von elektrischen Kabeln, insbesondere Schwachstromkabeln, oder jeder anderen Art von Kommunikationskabeln eines unterirdischen Verteilungsnetzes untergebracht werden können, und einen Schachtkopf (10), der auf dem Schacht (1) aufgesetzt ist,
**dadurch gekennzeichnet, dass** der Schachtkopf (10) einem der Ansprüche 1 bis 10 entspricht.

11. Anschlussschachtvorrichtung nach Anspruch 10, **dadurch gekennzeichnet, dass** der Schacht (1) mehrere übereinanderliegende und vorgefertigte Elemente (2) aus Verbundmaterial enthält und der Aufnahmerahmen (15) zum Aufnehmen des Deckels (16) aus Metall besteht.

12. Anschlussschachtvorrichtung nach Anspruch 10 oder 11, **dadurch gekennzeichnet, dass** der Schacht (1), der Schachtkopf (10), der Schalungsrahmen (14) und der Aufnahmerahmen (15) zum Aufnehmen des Deckels (16) rechteckig sind.

13. Anschlussschachtvorrichtung nach Anspruch 11 oder 12, **dadurch gekennzeichnet, dass** der Schachtkopf (10) in seiner Einbaulage an dem Schacht (1) mittels Schrauben (12) gehalten wird, die durch untere Laschen (11) des Schachtkopfes (10) hindurchgehen und eng an den entsprechenden Außenflächen des vorgefertigten oberen Elements (2) des Schachts (1) senkrecht zu diesen Flächen in Anlage kommen.

14. Anschlussschachtvorrichtung nach einem der Ansprüche 10 bis 13,
**dadurch gekennzeichnet, dass** der Schacht (1) an seinem unteren Teil durch eine flache Wand (3) verschlossen ist, die in diesem unteren Teil mittels Schrauben (5) befestigt ist.

## Claims

1. Connection chamber head (10) configured to be buried in the ground while laid on a chamber (1) in which may be housed means for connecting electric cable wires, for example particularly for low currents, or any other type of communication cable of an underground distribution network, which comprises a casing frame (14), a frame (15) for receiving a plug (16) for closing the chamber head (10), an inside peripheral hollow part (13) configured to house the casing frame (14) and the frame (15) for receiving the plug (16) resting on the casing frame (14) and which comprises height adjustment members (18) of the frame (15) for receiving the plug (16) when carried by the casing frame (14) to position an upper edge of the frame (15) for receiving the plug (16) flush with the ground in which are buried the chamber (1) and the chamber head (10), the height adjustment members (18) being configured for the height adjustment of the frame (15) relative to the bottom (13a) of the peripheral hollow part (13), in which the peripheral hollow part (13) is delimited between an outer peripheral lateral wall (19) and an upright peripheral inside wall (20) itself delimiting the central opening (17) of the chamber head (10) able to communicate with the chamber (1), and the casing frame (14) has in cross-section an L-shape, of which one (14a) of the peripheral branches is parallel to the bottom (13a) of the hollow part (13) and serves as a mounting for the frame (15) for receiving the plug (16) and the other peripheral branch (14b) adjacent to the peripheral inside wall (20) parallel thereto comprises a plurality of lugs (21) projecting above the upper flat edge (20a) of the peripheral inside wall (20) or above the bottom (13a) of the peripheral hollow part (13) and which are passed through perpendicularly by the height adjustment members (18) or comprise said height adjustment members (18) under them.

2. Chamber head (10) according to claim 1, **characterized in that** the height adjustment members comprise spacers (18) interposed between the casing frame (14) and the bottom (13a) of the peripheral hollow part (13).

3. Chamber head (10) according to claim 1, **characterized in that** the height adjustment members comprise screws (18) fastened to the casing frame (14) and which bear on the bottom (13a) of the peripheral hollow part (13).

4. Chamber head (10) according to claim 1, **characterized in that** the height adjustment members of the casing frame comprise screws (18) fastened to the casing frame (14) and which bear on a flat upper edge (20a) of the peripheral inside wall (20).

5. Chamber head (10) according to one of preceding claims, **characterized in that** the peripheral inside hollow part (13) of the chamber head (10) comprises a rabbet (22) formed in the outside peripheral lateral wall (19) and that defines with the peripheral inside wall (20) a space (23) in which can be accommodated the other peripheral branch (14b) of the casing frame (14) and in which rabbet (22) the frame (15) for receiving the plug (16) may be partly accommodated.

6. Chamber head (10) according to one of claims 1 to 5, **characterized in that** the outside peripheral lateral wall (19) of the chamber head (10) comprises recesses (24) in which lugs (25) may be sealed, by concrete cast in the hollow part (13) of the frame (15) for receiving the plug (16) of the chamber head (10), in order to seal the frame (15) for receiving the plug (16) in the chamber head (10).

7. Chamber head (10) according to one of claims 1 to 6, **characterized in that** it is formed from plastics or composite material.

8. Chamber head (10) according to one of claims 1 to 7, **characterized in that** it has a rectangular general shape.

9. Chamber head (10) according to one of claims 1 to 8, **characterized in that** it can be held in its laid position on the chamber (1) by screws (12) passing through lower lugs (11) of the chamber head (10) and which are able to come to bear tightly on the corresponding outside faces of the upper prefabricated member (2) of the chamber (1) perpendicularly to them.

10. Connection chamber device (10) configured to be buried in the ground comprising a chamber (1) in which can be accommodated means for connecting electric cables, for example particularly for low currents, or any other type of communication cable of an underground distribution network and a chamber head (10) laid on the chamber (1), **characterized in that** the chamber head (10) is in accordance with any one of claims 1 to 10.

11. A connection chamber device according to claim 10, **characterized in that** the chamber (1) comprises several members (2) that are superposed and manufactured from composite material, and the frame (15) for receiving the plug (16) is of metal.

12. A connection chamber device according to claim 10 or 11, **characterized in that** the chamber (1), the chamber head (10), the casing frame (14) and the frame (15) for receiving the plug (16) are rectangular.

13. A connection chamber device according to claim 11 or 12, **characterized in that** the chamber head (10) is held in its laid position on the chamber (1) by screws (12) passing through lower lugs (11) of the chamber head (10) and coming to bear tightly on the corresponding outside faces of the upper prefabricated member (2) of the chamber (1) perpendicularly to them.

14. A connection chamber device according to one of claims 10 to 13, **characterized in that** the chamber (1) is closed at its lower part by a planar wall (3) fastened **in that** lower part by screws (5).
